# FASCICULE DE BREVET EUROPEEN

(11) **EP 0 610 281 B1**
(45) Date de publication et mention de la délivrance du brevet: **03.01.1996**
(21) Numéro de dépôt: 92921745.3
(22) Date de dépôt: 07.10.1992
(51) Int. Cl.: G05D 16/20

(54) **DISPOSITIF DE REGULATION DE PRESSION POUR CIRCUIT HYDRAULIQUE**
DRUCKREGELEINRICHTUNG FÜR HYDRAULISCHEN SCHALTKREIS
PRESSURE CONTROL DEVICE FOR HYDRAULIC CIRCUITS

(30) Priorité: 31.10.1991 FR 9113482
(43) Date de publication de la demande: 17.08.1994
(73) Titulaire: ALLIEDSIGNAL EUROPE SERVICES TECHNIQUES, F-93700 Drancy (FR)
(72) Inventeur: KERVAGORET, Gilbert, F-95100 Argenteuil (FR)
(74) Mandataire: Bentz, Jean-Paul
(86) Numéro de dépôt international: FR9200927
(87) Numéro de publication internationale: WO9309484

(56) Documents cités:
- EP-A- 0 254 483
- EP-A- 0 357 964
- WO-A-90/05658
- WO-A-91/15388
- US-A- 4 744 389
- MACHINE DESIGN. vol. 63, no. 2, 24 Janvier 1991, CLEVELAND US pages 59 - 62 FABIAN ET AL. 'Expanding the use of COMPACT HYDRAULICS'

## Description

L'invention concerne un dispositif de régulation de pression pour circuit hydraulique.

Elle est particulièrement adaptée aux systèmes de freinage de véhicules automobiles à antiblocage des roues au freinage, et/ou d'antipatinage des roues à l'accélération. Les systèmes actuels d'antiblocage mettent en oeuvre, entre une source de fluide sous pression et un récepteur hydraulique tel qu'un moteur de frein, une électrovalve commandée par un calculateur en fonction de signaux représentatifs de la rotation des roues du véhicule pour, de manière générale, détendre la pression du fluide dans le moteur de frein lorsque le calculateur détecte l'imminence du blocage d'une roue, puis connecter une deuxième source de fluide sous pression pour augmenter à nouveau la pression, jusqu'à une nouvelle détection d'imminence de blocage, le cycle se renouvelant alors. Des électrovalves du même type sont employées dans des systèmes d'antipatinage pour engendrer une pression dans un moteur de frein d'une roue motrice lorsque le calculateur détecte une tendance au patinage de cette roue motrice, puis détendre cette pression lorsque la tendance au patinage a disparu.

Les électrovalves utilisées sont des électrovalves fonctionnant en tout-ou-rien, une électrovanne étant utilisée pour détendre la pression, une autre pour la remontée en pression, et ce pour chaque roue du véhicule. Or les périodes d'antiblocage ou d'antipatinage où des cycles tels que décrits ci-dessus se succèdent, durent un temps très court pendant lequel l'électrovalve change de très nombreuses fois d'états. Cela provoque un bruit désagréable de battement de la partie mobile de l'électrovalve, multiplié par le nombre d'électrovannes.

Par ailleurs, les électrovannes fonctionnant en tout-ou-rien, il apparaît des à-coups de pression dans les freins engendrant des régimes transitoires mal contrôlés.

On connaît par ailleurs, par exemple de WO-A-91/15388 ou EP-A-0 254 483 des systèmes de freinage à antiblocage et/ou à antipatinage utilisant des électrovalves proportionnelles, qui conduisent à des réalisations relativement complexes, et donc coûteuses.

La présente invention a pour but d'obvier à ces inconvénients en mettant en oeuvre une électrovalve dite proportionnelle assurant dans le circuit utilisateur les phases de détente de pression et de remontée en pression en fonction du courant circulant dans la bobine de l'électrovalve dans une plage déterminée de déplacement du noyau magnétique de l'électrovalve.

Un tel système d'antiblocage ou d'antipatinage présente alors l'avantage de pouvoir être commandé en faisant simplement varier le courant circulant dans une seule bobine par roue du véhicule surveillée ; il en résulte donc une forte diminution des à-coups de pression dans les freins. En outre, une telle électrovalve peut aisément être de conception simplifiée, résultant en un montage simplifié. Ceci allié à une forte diminution du nombre des composants d'un système d'antiblocage ou d'antipatinage, rend le coût d'un tel système notablement réduit.

La présente invention a donc pour objet un dispositif de régulation de pression pour un circuit hydraulique comprenant au moins un générateur de fluide sous pression, un moteur de frein et un réservoir de fluide sous basse pression, et incluant une électrovalve proportionnelle pilotée par un calculateur, l'électrovalve étant reliée par un conduit au générateur de fluide sous pression et par un conduit au moteur de frein, et comportant dans une carcasse une bobine électrique et un noyau magnétique coulissant commandant un tiroir déterminant deux chambres disposées de part et d'autre du tiroir et étant formé avec un clapet à bille coopérant avec un siège formé sur la carcasse, le tiroir étant formé avec une gorge délimitée par deux portées, une des portées coopérant avec le conduit de liaison avec le moteur hydraulique et ayant une longueur supérieure au diamètre de ce conduit d'une longueur représentant un recouvrement fonctionnel.

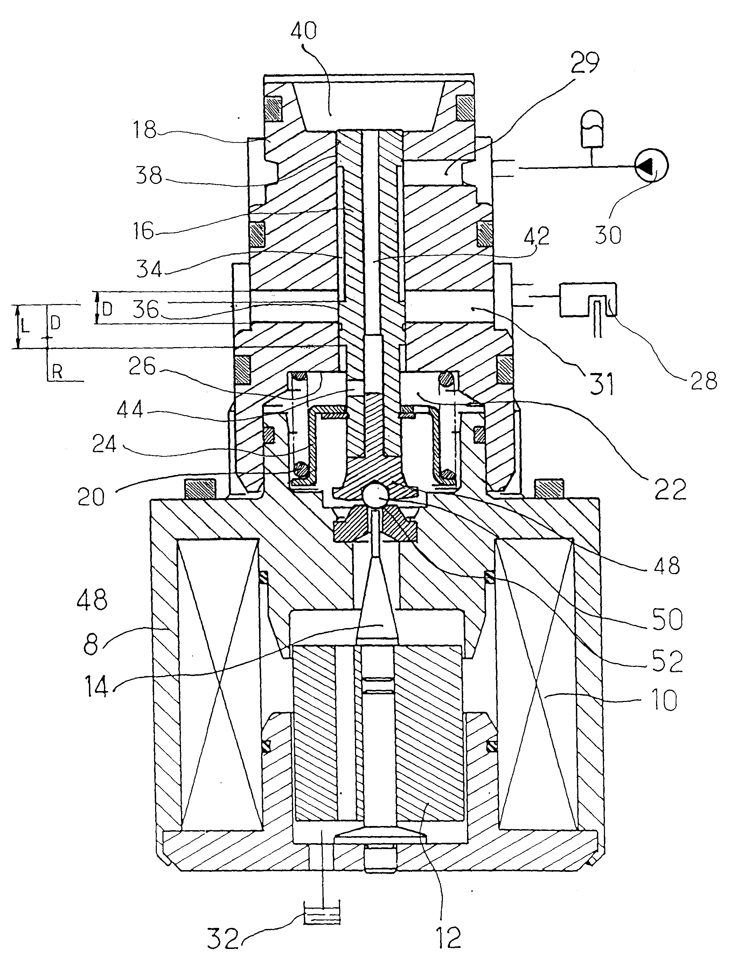

L'invention sera mieux comprise, et d'autres buts, avantages et caractéristiques de celle-ci apparaîtront plus clairement à la lecture de la description qui suit d'un mode préféré de réalisation donné à titre d'exemple non limitatif en référence aux dessins annexés sur lesquels :
- La Figure Unique représente schématiquement en coupe un mode de réalisation d'un dispositif conforme à la présente invention en position de repos.

On sait que la bobine des électrovalves dites proportionnelles, présente la caractéristique essentielle de pouvoir fournir un effort sensiblement constant pour un courant déterminé dans une plage de déplacement du noyau magnétique non négligeable, de l'ordre de 2 à 3 mm. Cette caractéristique est généralement obtenue grâce à une géométrie particulièrement des pièces polaires. Cette caractéristique est mise en oeuvre dans la présente invention pour assurer la fonction requise par modulation du courant circulant dans la bobine.

Sur la Figure, on reconnaît une telle électrovalve comprenant dans une carcasse 8 une bobine d'excitation 10, un noyau magnétique coulissant 12 pourvu de son poussoir 14 s'appuyant sur un tiroir 16 coulissant dans un alésage d'un corps 18. Un ressort précontraint 20 est disposé dans une chambre 22 par exemple entre une coupelle 24 solidaire du tiroir 16 et une paroi 26 du corps 18 de façon à solliciter le tiroir 16 vers sa position de repos représenté sur la Figure.

Le tiroir 16 est usiné de manière à pouvoir ouvrir ou fermer une communication entre un moteur de frein 28 raccordé à un conduit 31, une source de fluide sous pression 30 raccordée à un conduit 29 et un réservoir 32 conformément aux systèmes de régulation de pression hydraulique généralement utilisés. Pour ce faire, une gorge 34 est prévue à la périphérie du tiroir 16, entre deux portées 36 et 38, comme on le verra plus précisément par la suite.

Les deux chambres 22 et 40 situées de part et d'autre du tiroir 16 dans l'alésage sont à la même pression grâce à un perçage 42 pratiqué dans le tiroir 16 et débouchant dans ces deux chambres.

Le tiroir 16 comporte d'autre part à l'une de ses extrémités un clapet 48 à bille 50 coopérant avec un siège 52 formé sur la carcasse 8. Le clapet à bille 50-52 ouvre ou ferme la communication entre la chambre 22 et le réservoir 32.

On notera que, grâce à cette disposition avantageuse, tous les composants de l'électrovalve sont assemblés uniquement par des mouvements de direction axiale, et il n'est plus besoin de goupilles et autres butées transversales.

On va maintenant exposer le fonctionnement de l'électrovalve qui vient d'être décrite. En position de repos, telle que représentée, la source de fluide sous pression 30 est en communication avec le moteur de frein 28 par l'intermédiaire de la gorge 34. Les deux chambres d'extrémité 22 et 40 communiquent entre elles par les perçages axial 42 et radial 44 pratiqués dans le tiroir 16, et sont elles isolées du réservoir 32 par le clapet 50 reposant sur son siège 52.

Lorsque l'électrovalve est excitée, par exemple en période d'antiblocage des roues dans le cadre de l'application préférée de l'invention, tout d'abord le courant circulant dans la bobine engendre une force s'opposant à celle du ressort 20 pour soulever la bille 50 de son siège 52 et ouvrir la communication entre la chambre 22, et donc la chambre 40, et le réservoir 32. La force est exercée par le poussoir 14 à l'encontre de celle du ressort 20 quelle que soit la pression régnant dans le circuit hydraulique d'utilisation entre la source de fluide sous pression 30 et le moteur de frein 28, puisque les chambres 22 et 40 de part et d'autre du tiroir 16 sont toujours à la pression du réservoir 32.

Ceci permet notamment à l'électrovalve de ne pas présenter une importante consommation électrique. L'ouverture du clapet 50, 52 et la mise en communication des chambres 22 et 40 avec le réservoir 32 a lieu avant que le courant dans la bobine 10 n'atteigne son intensité nominale. Puis l'intensité étant nominale, le tiroir 16 a été déplacé suffisamment pour que la portée 36 vienne obturer complètement le conduit 31 d'alimentation du moteur de frein 28, qui se trouve alors en position d'isolement du reste du circuit hydraulique.

La portée 36 du tiroir 16 a été réalisée de façon à présenter un recouvrement positif prédéterminé, c'est-à-dire qu'elle présente une longueur R représentant le recouvrement fonctionnel.

D'autre part, l'électrovalve utilisée étant proportionnelle l'effort E exercé par le poussoir 14 sur le tiroir 16 est proportionnel à l'intensité I du courant parcourant la bobine 10. A l'équilibre, cet effort est égal et de sens contraire à celui qui est exercé par le ressort 20 sur le tiroir 16. Cet effort est égal à la précontrainte au repos F du ressort 20 augmentée du produit de la raideur K du ressort 20 par le déplacement X du tiroir 16. On en déduit le fonctionnement de l'électrovalve proportionnelle où à chaque valeur du courant I dans la bobine 10 correspond une position du tiroir 16.

On a vu que l'invention prévoit de réaliser la portée 36 avec un recouvrement fonctionnel de façon à ce qu'il existe une position intermédiaire du tiroir 16 pour laquelle le moteur de frein 28 est en phase d'isolement. Il existe donc une valeur Im du courant I correspondant à cette position d'isolement. Lorsque l'on désire passer en phase de détente de la pression dans le récepteur de pression 28, on augmente le courant circulant dans la bobine 10 d'une valeur prédéterminé i de façon à déplacer le tiroir 16 d'une quantité prédéterminé x au moins égale à la moitié du recouvrement fonctionnel R, pour que la portée 36 découvre le passage reliant le conduit 31 à la chambre 22 et au réservoir 32, le clapet 50-52 étant ouvert. Lorsque l'on désire passer en phase d'admission de pression dans le moteur de frein 28, on diminue le courant circulant dans la bobine 10 de la valeur prédéterminée i de façon à laisser le tiroir 16 se déplacer sous l'action du ressort 20 de la quantité prédéterminée x pour que la portée 36 découvre le passage reliant le conduit 31 à la gorge 34 et au conduit 29 amenant le fluide sous pression en provenance de la source de pression 30.

L'effort à fournir par le poussoir 14 pour placer le tiroir 16 dans la position d'isolement, c'est-à-dire pour placer la portée 36 en position d'obturation du conduit 31, est connu par construction.

Il en est donc de même de la valeur Im du courant commandant cette position, qui pourra être mise dans la mémoire du calculateur. Par contre, la quantité x, et donc la valeur i, est déterminante pour la section de passage du fluide en provenance de la source 30 ou vers le réservoir 32, et donc pour la pente des courbes représentant l'évolution de la pression en fonction du temps, aussi bien pour les phases d'admission de pression que de détente de pression. La valeur i sera alors déterminée par le calculateur en fonction de son analyse de la vitesse des roues du véhicule, par exemple pour effectuer des phases de remontée tempérée en pression et des phases de détente rapide en pression, ou inversement. On voit donc bien qu'on a réalisé, conformément à l'invention, une électrovalve à trois voies et trois positions : isolement, détente et admission, dans laquelle les positions de détente et d'admission peuvent être modulées à volonté selon les conditions d'utilisation. Cette électrovalve est particulièrement simple et fiable, et de montage facile. Elle remplace à elle seule les deux électrovalves couramment utilisées pour chaque roue, et permet de plus la suppression d'autres composants annexes tels que des restrictions et des clapets anti-retour.

Bien que seul un mode de réalisation de l'invention ait été décrit, il est évident que l'homme du métier pourra y apporter de nombreuses modifications sans sortir du cadre de l'invention telle que définie par les revendications annexées.

## Revendications

1. Dispositif de régulation de pression pour un circuit hydraulique comprenant au moins un générateur (30) de fluide sous pression, un moteur de frein (28) et un réservoir de fluide (32) sous basse pression, et incluant une électrovalve proportionnelle pilotée par un calculateur, l'électrovalve étant reliée par un conduit (29) au générateur (30) de fluide sous pression et par un conduit (31) au moteur de frein (28), et comportant dans une carcasse (8) une bobine électrique (10) et un noyau magnétique (12) coulissant commandant un tiroir (16) coulissant dans un alésage prévu dans un corps (18), le tiroir (16) déterminant deux chambres (22, 40) disposées de part et d'autre du tiroir (16) et étant formé avec un clapet (48) à bille (50) coopérant avec un siège (52) formé sur la carcasse (8), le tiroir (16) étant formé avec une gorge (34) délimitée par deux portées (36, 38), une des portées (36) coopérant avec le conduit (31) de liaison avec le moteur de frein (28) et ayant une longueur (L) supérieure au diamètre (D) de ce conduit d'une longueur (R) représentant un recouvrement fonctionnel.

2. Dispositif selon la revendication 1, caractérisé en ce que les deux chambres (22, 40) disposées de part et d'autre du tiroir (16) communiquent entre elles par un perçage axial (42) pratiqué dans le tiroir (16).

3. Dispositif selon la revendication 2, caractérisé en ce que le tiroir (16) est déplaçable dans trois positions, une position d'isolement où le conduit (31) de liaison au moteur de frein (28) est obturé, une position de détente où ce conduit (31) est relié au réservoir à basse pression (32) et une position d'admission où le conduit (31) est relié au générateur (30) de fluide sous pression.

4. Dispositif selon la revendication 3, caractérisé en ce que les positions de détente et d'admission sont modulables.

## Patentansprüche

1. Druckregelvorrichtung für einen Hydraulikkreis, der wenigstens einen Fluiddruckgenerator (30), eine Bremsbetätigungsvorrichtung (28) und einen Niederdruckfluidvorratsbehälter (32) enthält und ein Proportional-Elektroventil umfaßt, das von einem Rechner gesteuert ist, wobei das Elektroventil über eine Leitung (29) mit dem Fluiddruckgenerator (30) und über eine Leitung (31) mit der Bremsbetätigungsvorrichtung (28) verbunden ist und in einem Gehäuse (8) eine elektrische Spule (10) sowie einen gleitenden Magnetkern (12) enthält, der einen Schieber (16) steuert, der in einer in einem Körper (18) vorgesehenen Bohrung gleitet, wobei der Schieber (16) zwei Kammern (22, 40) abgrenzt, die beiderseits des Schiebers (16) angeordnet sind, und mit einem Ventil (48) mit Kugel (50) ausgebildet ist, die mit einem an dem Gehäuse (8) ausgebildeten Sitz (52) zusammenwirkt, wobei der Schieber (16) mit einer Nut (34) ausgebildet ist, die durch zwei Steuerflächen (36, 38) abgegrenzt ist, wobei eine (36) der Steuerflächen mit der Leitung (31) zum Anschließen der Bremsbetätigungsvorrichtung (28) zusammenwirkt und eine Länge (L) aufweist, die um eine Länge (R), welche eine funktionelle Überdeckung darstellt, größer als der Durchmesser (D) dieser Leitung ist.

2. Vorrichtung nach Anspruch 1, dadurch gekennzeichnet, daß die beiderseits des Schiebers (16) angeordneten beiden Kammern (22, 40) miteinander durch eine in dem Schieber (16) ausgebildete axiale Bohrung (42) in Verbindung stehen.

3. Vorrichtung nach Anspruch 2, dadurch gekennzeichnet, daß der Schieber (16) in drei Stellungen verstellt werden kann, nämlich eine Isolationsstellung, in welcher die Leitung (31) zum Anschließen der Bremsbetätigungsvorrichtung (28) verschlossen ist, eine Entspannungsstellung, in welcher diese Leitung (31) mit dem Niederdruckvorratsbehälter (32) verbunden ist, und eine Zufuhrstellung, in welcher die Leitung (31) mit dem Fluiddruckgenerator (30) verbunden ist.

4. Vorrichtung nach Anspruch 3, dadurch gekennzeichnet, daß die Entspannungsstellung und die Zufuhrstellung modulierbar sind.

## Claims

1. Pressure regulation device for a hydraulic system comprising at least one generator (30) of fluid under pressure, a brake actuator (28) and a reservoir (32) of fluid under low pressure, and including a proportional electrovalve controlled by a computer, the electrovalve being connected via a duct (29) to the generator (30) of fluid under pressure and via a duct (31) to the brake actuator (28), and comprising in a casing (8) an electrical coil (10) and a sliding magnetic core (12) controlling a slide valve (16) sliding in a bore provided in a body (18), the slide valve (16) determining two chambers (22, 40) arranged on either side of the slide valve (16) and being formed with a valve (48) with ball (50) co-operating with a seating (52) formed on the casing (8), the slide valve (16) being formed with a groove (34) delimited by two bearing surfaces (36, 38), one of the bearing surfaces (36) co-operating with the duct (31) for connection with the brake actuator (28) and having a length (L) greater than the diameter (D) of that duct by a length (R) representing a functional overlap.

2. Device according to Claim 1, characterized in that the two chambers (22, 40) arranged on either side of the slide valve (16) communicate with one another via an axial drilling (42) made in the slide valve (16).

3. Device according to Claim 2, characterized in that the valve (16) is displaceable in three positions, an isolation position where the duct (31) for connection to the brake actuator (28) is closed off, a release position where that duct (31) is connected to the low pressure reservoir (32) and an admission position where the duct (31) is connected to the generator (30) of fluid under pressure.

4. Device according to Claim 3, characterized in that the release and admission positions are capable of modulation.
